# EUROPEAN PATENT APPLICATION

(11) **EP 2 366 520 A1**
(43) Date of publication of application: **21.09.2011**
(21) Application number: 11152249.6
(22) Date of filing: 26.01.2011
(51) Int. Cl.: B29C 33/12, B29C 33/14, B29C 33/18, B29C 45/14

(54) **Insert-molded product producing method, insert-molded product and mold**

(30) Priority: 17.03.2010 JP 2010061051
(71) Applicant: Fujifilm Corporation, Minato-ku Tokyo (JP)
(72) Inventor: Itoh, Hidekane, Kanagawa (JP)
(74) Representative: Klunker . Schmitt-Nilson . Hirsch

(57) **Abstract**

In a method of producing an insert-molded product, a metallic plate member (7) is inserted in a mold (1) so that the plate member (7) is disposed on a ridge (19) that is provided in the mold (1) to define a shape of a recess (5) of the insert-molded product (1), with a top surface of the plate member (7) facing the ridge (19), and a resin is injected into the mold (11) so that the plate member (7) is positioned by fitting the plate member (7) to a profile of the ridge (19) under an injection pressure produced as the resin is injected without holding a rear surface of the plate member (7) with a part of the mold (11) to achieve molding of the resin.

## Description

### BACKGROUND OF INVENTION

The invention relates to an insert-molded product producing method and an insert-molded product and particularly to a method of producing an insert-molded product by inserting a metallic material into a mold and filling the mold with a resin material. The present invention also relates to a mold used in such a method.

In some lens assemblies such as those used in digital cameras, for example, an actuating shaft secured to a piezoelectric element is placed in frictional engagement with an actuated member holding a lens, so that expansion and contraction of the piezoelectric element cause the actuating shaft to move in reciprocal motion in the axial direction in order to slide the actuated member along the actuating shaft. The actuated member has a recess where a metallic surface is exposed, and the recess is placed in frictional engagement with the actuating shaft to produce a consistent frictional force between them and cause the actuated member to move at a desired speed. Accordingly, misalignment of a metallic member of the actuated member or other inadequacy makes movement of the actuated member inconsistent and greatly lowers the optical performance of the lens assembly.

Typically, a resin is filled into a mold into which the metallic member has been previously inserted to produce a molded product comprising the actuated member integrated therein. In order to restrain the misalignment or the like of the metallic member in such an insert-molded product, it is of critical importance that the metallic member inserted into the mold be positioned with a high accuracy with respect to a ridge formed inside the mold for defining the shape of the metallic member and that the metallic member be shaped to fit the profile of the ridge.

JP 2009-66841 A, for example, proposes a method of providing a retainer projection opposite the ridge inside the mold and holding the metallic member between the retainer projection and the ridge to increase the accuracy with which the metallic member is positioned and shaped.

However, such a method providing the retainer projection inside the mold complicates the inner structure of the mold while a variation in thickness among metal members could cause a gap or other defects as the metallic member is held between the ridge and the projection, possibly lowering the accuracy with which the metallic member can be positioned and shaped.

### SUMMARY OF INVENTION

An object of the present invention is to overcome the above-mentioned problems associated with the prior art and provide an insert-molded product producing method for producing an insert-molded product of which the metallic member can be positioned and shaped with an increased accuracy by using a simplified mold structure.

Another object of the present invention is to provide an insert-molded product produced by such a method and a mold used in the method.

A method of producing an insert-molded product having a recess where a metallic surface is exposed according to the present invention comprises the steps of:
inserting a metallic plate member in a mold so that the plate member is disposed on a ridge that is provided in the mold to define a shape of the recess, with a top surface of the plate member facing the ridge, the plate member being previously deformed so as to correspond to the ridge; and
injecting a resin into the mold and positioning the plate member by fitting the plate member to a profile of the ridge under an injection pressure produced as the resin is injected without holding a rear surface of the plate member with a part of the mold to achieve molding of the resin.

An insert-molded product according to the present invention is produced by the above-described production method.

A mold for producing an insert-molded product having a recess where a metallic surface is exposed according to the present invention comprises:
a ridge for defining a shape of the recess and carrying a metallic plate member with its top surface facing the ridge without a rear surface of the plate member being held; and
a gate formed and disposed so as to allow a resin to flow toward the ridge from a front side,
wherein molding of the resin is achieved while positioning the plate member by fitting the plate member to a profile of the ridge under an injection pressure produced as the resin is injected.

### BRIEF DESCRIPTION OF DRAWINGS

Fig. 1 is a front view of an insert-molded product produced by a production method according to Embodiment 1 of the invention.
Fig. 2 is a perspective view illustrating a configuration of a plate member used in Embodiment 1.
Fig. 3 is a sectional view illustrating a configuration of a mold used in Embodiment 1.
Fig. 4 is a sectional view illustrating a configuration of a ridge in the mold used in Embodiment 1.
Fig. 5 is a sectional view illustrating how a plate member is shaped to match the profile of the ridge.
Fig. 6 is a sectional view illustrating how a plate member having an angle greater than that of the ridge is shaped to match the profile of the ridge.
Fig. 7 is a sectional view illustrating how a plate member having an angle smaller than that of the ridge is shaped to match the profile of the ridge.
Fig. 8 is a perspective view illustrating a configuration of a recess of the insert-molded product produced according to Embodiment 1.
Fig. 9 is a perspective view illustrating a plate member used in a modification of Embodiment 1.
Fig. 10 is a perspective view of a configuration of a sheet member used in the embodiment 2.
Fig. 11 is a perspective view illustrating a configuration of a recess of an insert-molded product produced according to Embodiment 2.
Fig. 12 is a sectional view illustrating an end portion of a plate member in the insert-molded product produced according to Embodiment 2.
Fig. 13 is a sectional view illustrating an end portion of a plate member in an insert-molded product produced according to a modification of Embodiment 2.
Fig. 14 is a sectional view illustrating an end portion of a plate member in an insert-molded product produced according to another modification of Embodiment 2.
Fig. 15 is a sectional view illustrating an end portion of a plate member in an insert-molded product produced according to still another modification of Embodiment 2.
Fig. 16 is a sectional view illustrating a structure of a mold used in Embodiment 3.

### DETAILED DESCRIPTION OF INVENTION

The present invention will be described in detail referring to preferred embodiments illustrated in the attached drawings.

### Embodiment 1

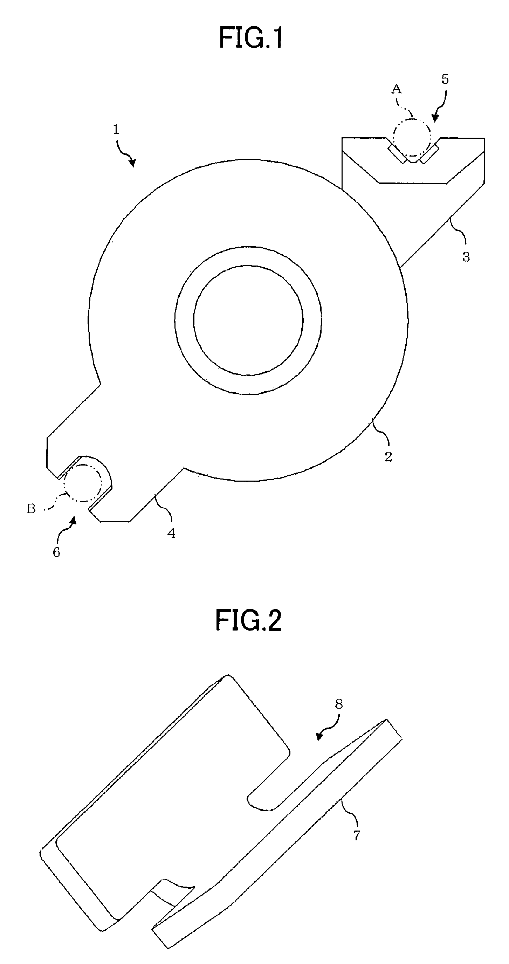

Fig. 1 illustrates a configuration of an insert-molded product 1 produced by an insert-molded product producing method according to Embodiment 1 of the invention. The insert-molded product 1 comprises a holder portion 2 in the form of a disk for holding, for example, a lens and engagement portions 3 and 4 for engaging respectively with a drive shaft A and a guide shaft B both provided parallel to the optical path of the lens held by the holder portion 2.

The engagement portion 3 comprises a V-shaped recess 5 having a metallic surface exposed. The recess 5 engages with the drive shaft A that moves in reciprocal motion in the axial direction in response to the expansion and contraction of a piezoelectric element. The engagement portion 4 comprises a U-shaped guide groove 6, which engages with the guide shaft B having both ends fixed.

When the piezoelectric element deforms slowly, the insert-molded product 1 moves together with the drive shaft A along the guide shaft B with the recess 5 engaged with the shaft A whereas when the piezoelectric element deforms rapidly, only the drive shaft A moves by virtue of inertia of the mass of the insert-molded product 1 with the recess 5 remaining in the same position with respect to the guide shaft B. Thus, the insert-molded product 1 can be moved along the drive shaft A and the guide shaft B by repeatedly deforming the piezoelectric element at different speeds in the expansion and contraction directions.

Fig. 2 illustrates a configuration of a metallic plate member 7 that is exposed in the recess 5 of the engagement portion 3. The plate member 7 comprises a top surface exposed in the recess 5 and a rear surface embedded in the recess 5 and has a V-shaped cross section corresponding to the drive shaft A to fit therein, with the top surface on the inside thereof. The V-shape of the plate member 7 is realized by deforming the plate member 7 so as to be matched with the shape of the ridge inside the mold at the time of insert molding. To that end, the plate member 7 comprises slits 8 cut into the deformed portion (folded portion of the V shape) to facilitate deformation into the shape of the ridge at the time of insert molding.

While detachment of the plate member 7 from the insert-molded product 1 is prevented because the periphery of the plate member 7 is covered by a resin, the plate member 7 may be more effectively kept from detachment, where necessary, by bending a portion of the plate member 7, for example, to form an anchor portion embedded in the resin.

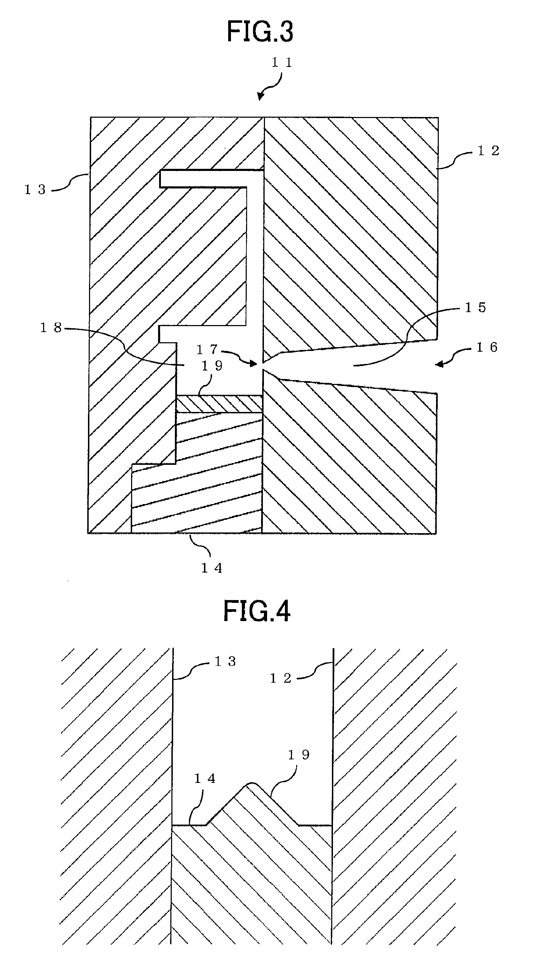

Fig. 3 illustrates a configuration of a mold 11 used in Embodiment 1. The mold 11 comprises a fixed die plate 12, a movable die plate 13 that moves to open and close with respect to the fixed die plate 12, and a slide core 14 provided between the fixed die plate 12 and the movable die plate 13.

The fixed die plate 12 comprises a runner 15 formed therethrough from the outer side to the inner side that is in contact with the movable die plate 13 and the slide core 14. The runner 15 is provided on its outer end with a supply inlet 16 for receiving a supply of resin from an injection molding machine and on its inner end with a gate 17 through which the resin supplied from the supply inlet 16 is injected into the mold 11 via the runner 15.

The movable die plate 13 has a hollow so as to form a cavity corresponding to the shape of the insert-molded product 1 with the fixed die plate 12 and the slide core 14.

The slide core 14 is inserted between the fixed die plate 12 and the movable die plate 13 from below. The top surface of the slide core 14 forms a part of the wall surface defining the cavity 18 and has a ridge 19 for shaping the recess 5 of the insert-molded product 1.

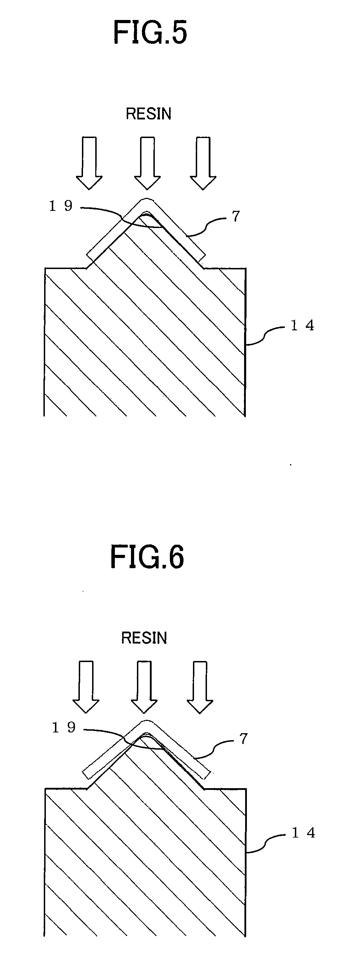

Fig. 4 illustrates a configuration of the slide core 14. The ridge 19 formed on the top surface of the slide core 14 has a shape corresponding to the drive shaft A that engages with the recess 5 of the insert-molded product 1. As illustrated in Fig. 5, the metallic plate member 7, which has been so deformed as to correspond to the shape of the ridge 19, is previously disposed on the ridge 19 in the mold 11 in such a manner that the top surface of the plate member 7 (the exposed surface in the insert-molded product 1) faces the ridge 19. The gate 17 of the fixed die plate 12 is formed in such a position as to allow the resin to flow onto the ridge 19 of the slide core 14 from above (the front side). Thus, the molding of the insert-molded product 1 can be achieved while positioning the plate member 7 by fitting the plate member 7 to the profile of the ridge 19 of the slide core 14 under a resin injection pressure.

Next, the operation of the mold 11 for producing the insert-molded product 1 will be described.

First, in a state that the mold 11 is opened, the metallic plate member 7 deformed so as to correspond to the ridge 19 of the slide core 14 is disposed on the ridge 19 of the slide core 14 with the top surface of the plate member 7 facing the ridge 19. Next, the mold 11 is closed so that the slide core 14 bearing the plate member 7 on the ridge 19 is disposed between the fixed die plate 12 and the movable die plate 13. Thus, the closing of the mold 11 forms the cavity 18 for molding the insert-molded product 1 defined by the fixed die plate 12, the movable die plate 13, and the slide core 14.

Then, the injection molding machine injects a resin from the supply inlet 16 of the fixed die plate 12 through the runner 15 and the gate 17 into the cavity 18. The gate 17 is disposed in such a position and direction as to allow the resin to flow toward the ridge 19 of the slide core 14 from above or the front side. Therefore, the resin injected from the gate 17 flows directly onto the rear surface of the metallic plate member 7 placed on the ridge 19. The plate member 7 has the slits 8 cut into the deformed portion to facilitate deformation into the shape of the ridge 19. The cavity 18 is filled with the resin while positioning the plate member 7 by fitting the plate member 7 to the profile of the ridge 19 under a resin injection pressure.

Thus, the position and configuration accuracies of the plate member 7 can be increased without a part of the mold 11 holding the rear surface of the plate member 7.

When the resin filled in the cavity 18 has cured to complete molding of the insert-molded product 1, the slide core 14 is lowered, and the movable die plate 13 is opened to permit retrieval of the insert-molded product 1.

The ridge 19 of the slide core 14 subsequently receives another plate member 7 to be incorporated in the next insert-molded product 1. Even when the V-shape of the plate member 7 is slightly different from the shape of the ridge 19 of the slide core 14, the molding of the insert-molded product 1 can be achieved while positioning the plate member 7 by fitting the sheet member 7 to the profile of the ridge 19 under a resin injection pressure.

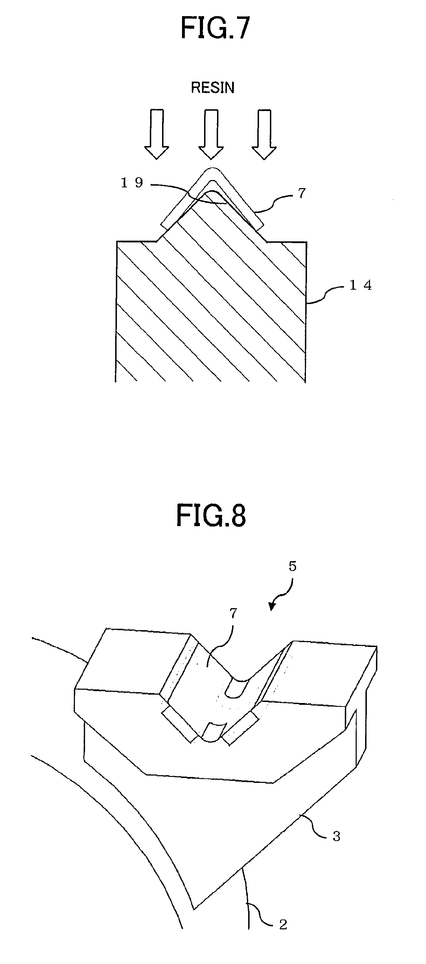

For example, when the inner angle of the plate member 7 is slightly larger than that of the ridge 19 of the slide core 14 as illustrated in Fig. 6 and therefore the plate member 7 only touches the top portion of the ridge 19, the molding of the insert-molded product 1 can be achieved through positioning of the plate member 7 such that the plate member 7 is fitted to the profile of the ridge 19 under a resin injection pressure. Further, when the inner angle of the plate member 7 is slightly smaller than that of the ridge 19 of the slide core 14 as illustrated in Fig. 7 and therefore the plate member 7 only touches the lower portions of the ridge 19, the molding of the insert-molded product 1 can be achieved through positioning of the plate member 7 such that the plate member 7 is fitted to the profile of the ridge 19 under a resin injection pressure.

Thus, even with a variation in the V shape of the plate member 7, the metal surface can be formed in the recess 5 of the insert-molded product 1 in a specified position with a specified shape as illustrated in Fig. 8.

According to this embodiment, the position and configuration accuracy of the metal surface exposed in the recess 5 can be increased by molding the insert-molded product 1 through positioning of the plate member 7 such that the plate member 7 is fitted to the profile of the ridge 19 under a resin injection pressure without holding the rear surface of the plate member 7 with a part of the mold. Further, even with a variation in the shape of the plate member 7, it is possible to obtain the insert-molded product 1 which has the recess 5 with a metallic surface exposed in a specified position with a specified shape.

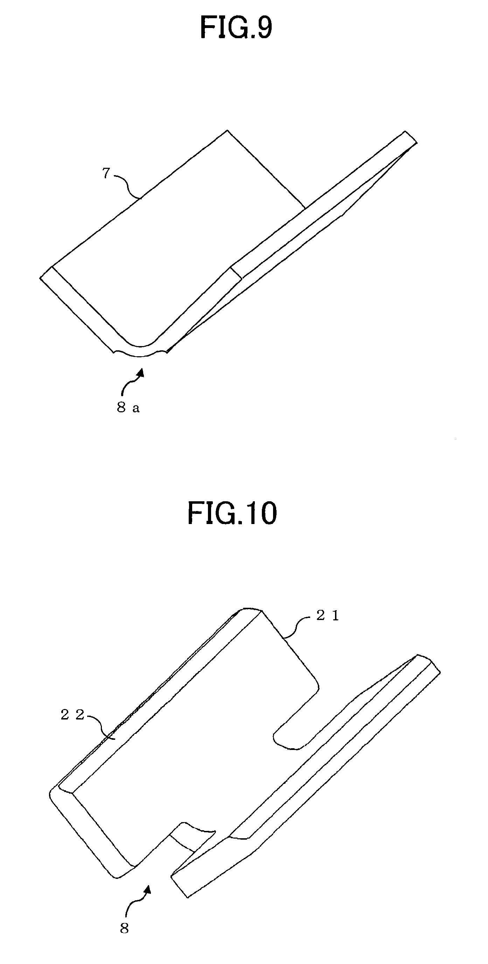

While the slits 8 cut into the plate member 7 used in this embodiment are provided to reduce the rigidity by cutting out a part of the portion that is so deformed as to correspond to the shape of the ridge 19, reduction of rigidity may be achieved otherwise, provided that positioning of the plate member 7 can be effected by fitting the plate member 7 to the profile of the ridge 19 of the slide core 14 in the process of insert-molding. For example, as illustrated in Fig. 9, rigidity may be reduced by providing the portion to be so deformed as to correspond to the ridge 19 with a thinned portion 8a that is thinner than the other portion.

### Embodiment 2

Fig. 10 illustrates a configuration of a plate member 21 used in an insert-molded product producing method according to Embodiment 2 of the invention. The plate member 21 comprises the slits 8 cut into the portion that is to be deformed so as to correspond to the shape of the ridge 19 and detachment prevention portions 22 formed by chamfering the edges of the top surface side of the end faces into flat planes.

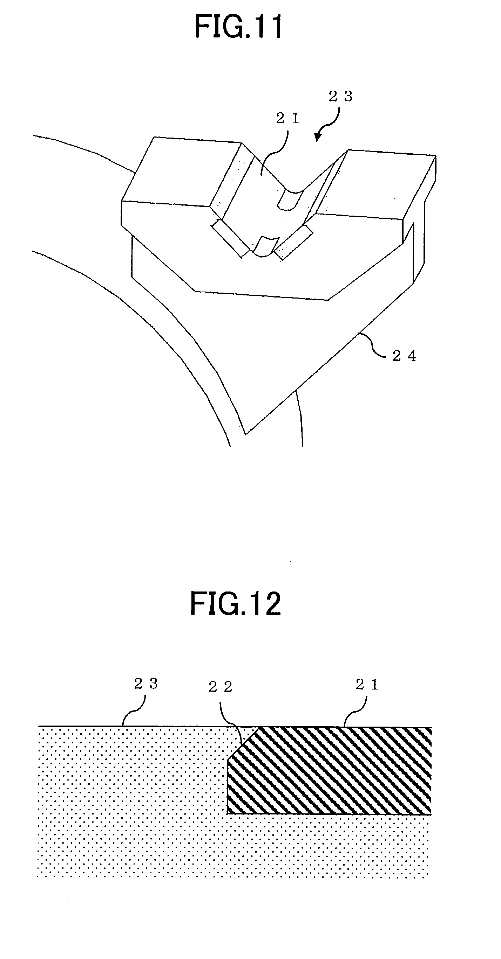

The plate member 21 is placed on the ridge 19 of the slide core 14 as in Embodiment 1 and inserted in the mold 11 to produce an insert-molded product. As illustrated in Fig. 11, an engagement portion 24 of the molded insert-molded product has a recess 23 where the top surface of the plate member 21 is exposed in a specified position with a specified shape.

As illustrated in Fig. 12, in the recess 23, the surfaces of the detachment prevention portions 22 are buried in the resin, so that the detachment prevention portions 22 may produce an excellent effect of preventing detachment of the plate member 21 from the insert-molded product without the need to separately provide an anchor.

The detachment prevention portions 22 provided on the end faces of the plate member 21 may have any given shape as appropriate capable of preventing the plate member 21 from the plastic molded product by being buried in the plastic molded product.

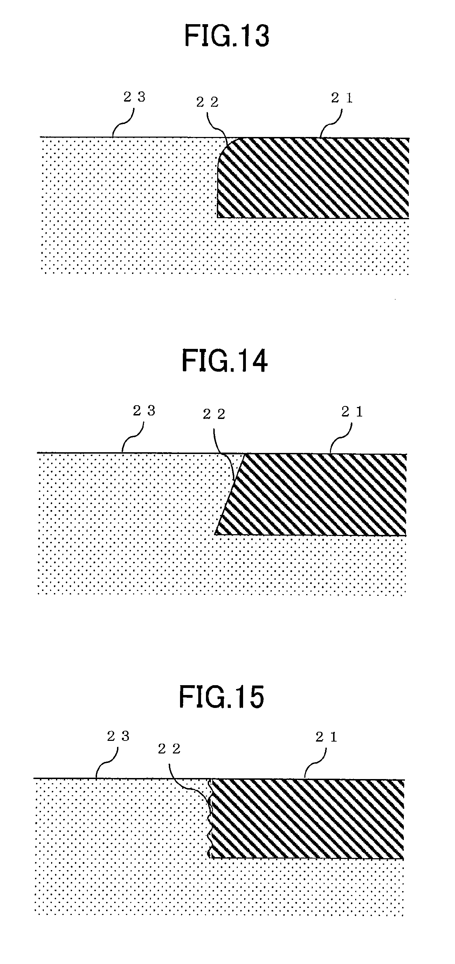

For example, the detachment prevention portions 22 may be formed by chamfering the edges of the top surface side of the plate member 21 into curved planes as illustrated in Fig. 13. Alternatively, the detachment prevention portions 22 may be inclined so as to form an obtuse angle or a right angle between the end face of the plate member 21 and the top surface (an angle in a range of 90° inclusive to 180° exclusive) as illustrated in Fig. 14 or may be roughened surfaces as illustrated in Fig. 15.

### Embodiment 3

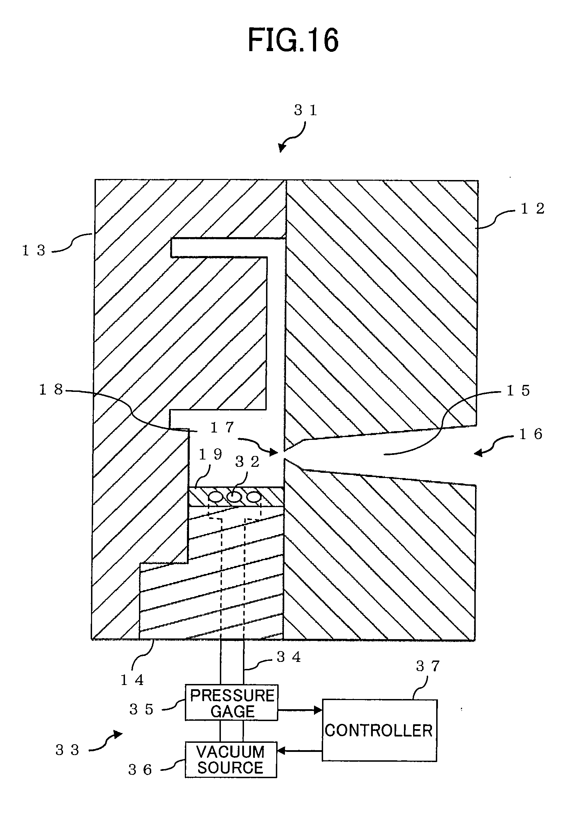

Fig. 16 illustrates a configuration of a mold 31 used in an insert-molded product producing method according to Embodiment 3 of the invention. As compared with the mold 11 illustrated in Fig. 3, the mold 31 additionally comprises a plurality of suction apertures 32 in the ridge 19 of the slide core 14 and a suction device 33 for sucking the air inside the mold 31 through the suction apertures 32. The plurality of suction apertures 32 are formed in specified positions in the ridge 19 where the plate member 7 is placed. The suction device 33 comprises hoses 34 extending from the outside of the mold 31 through the slide core 14 to communicate with the suction apertures 32, a pressure gage 35 connected to the hoses 34 to measure the air pressure, a vacuum source 36 for sucking the air inside the mold 31, and a controller 37 electrically connected with the pressure gage 35 and the vacuum source 36. The controller 37 controls the suction force by the vacuum source 36 according to the measurement given by the pressure gage 35.

First, in a state that the mold 31 is opened, the vacuum source 36 of the suction device 33 is actuated while the plate member 7 is placed on the ridge 19 of the slide core 14 to allow the plate member 7 to be sucked by the suction force applied through the suction apertures 32. With the plate member 7 sucked onto the ridge 19, the pressure indicated by the pressure gage 35 decreases because the suction apertures 32 are closed by the plate member 7. The controller 37 detects the measurement given by the pressure gage 35 and determines whether the plate member 7 is sucked onto the ridge 19 in a specified position such that all the suction apertures 32 are closed. When the controller 37 detects a pressure of -7 kPa, for example, the controller 37 determines that the plate member 7 is correctly sucked onto the ridge 19 in a specified position.

When the controller 37 determines that the plate member 7 is sucked onto the ridge 19 in a specified position, the mold 31 is closed so as to position the slide core 14, which now has the plate member 7 sucked onto the ridge 19 in a specified position, between the fixed die plate 12 and the movable die plate 13.

Upon closure of the mold 31, a resin is ejected from the supply inlet 16 of the fixed die plate 12. As the ejected resin flows from the gate 17 directly onto the rear surface of the plate member 7 sucked onto the ridge 19, the controller 37 stops the suctioning action by the suction device 33. The cavity 18 is filled with the resin, which is cured to produce the insert-molded product 1. Upon completion of molding, the mold 31 is opened to retrieve the insert-molded product 1, whereupon molding of the next insert-molded product 1 is started.

According to Embodiment 3, provision of the suction device 33 prevents shifting and detachment of the plate member 7 from a specified position of the ridge 19 due to vibrations produced when, for example, the slide core 14 is inserted in the mold 31.

The suction by the suction device 33 may be terminated when the plate member 7 can no longer shift from the specified position during molding or may be continued without interruption throughout the molding of the insert-molded product 1.

While the mold 31 according to Embodiment 3 has a plurality of suction apertures 32 in the ridge 19, a single suction aperture may be provided in the ridge 19, provided that the plate member 7 can be secured in a specified position of the ridge 19 by suction.

While the resin flows from the gate 17 directly onto the front side of the ridge 19 of the slide core 14 according to Embodiments 1 to 3, a guide plate may, for example, be provided between the gate 17 and the ridge 19 to control the resin flow direction, provided that the plate member 7 or 21 can be positioned by fitting the plate member 7 or 21 to the profile of the ridge 19 under a resin injection pressure. Thus, even when the gate 17 cannot be located just above the ridge 19, the guide plate can control the resin flow direction so as to allow the resin to flow onto the front side of the ridge 19.

Preferably, the resin is allowed to flow onto the apex of the ridge 19.

Further, there may be a plurality of ridges 19, allowing the resin to flow onto the front side of the ridges 19. Thus, there can be formed a plurality of recesses each having a metallic surface exposed in a specified position with a specified shape.

Further, there may be provided a plurality of runners 15 and gates 17, provided that the plate member 7 or 21 can be positioned by fitting the plate member 7 or 21 to the profile of the ridge 19 under an injection pressure of the resin flowing onto the front side of the ridge 19.

According to Embodiments 1 to 3, the slide core 14 need only be secured to either the fixed die plate 12 or the movable die plate 13.

According to Embodiments 1 to 3, the slide core need only be located between the fixed die plate and the movable die plate when the mold is closed. Therefore, the closure of the mold may be achieved in such a manner that when the movable die plate, to which the slide core is secured, has closed to a degree, the slide core moves as it is pressed by the fixed die plate until the slide core closes substantially at the same time as the fixed die plate and the movable die plate. Alternatively, when the movable die plate has closed to a degree, the side core, which is secured to the fixed die plate, may move as it is pressed by the movable die plate, until the slide core closes substantially at the same time as the fixed die plate and the movable die plate. Further, the movable die plate, to which the slide core is secured, may close after the slide core has closed, allowing the fixed die plate to close last.

## Claims

1. A method of producing an insert-molded product (1) having a recess (5, 23) where a metallic surface is exposed, the method comprising the steps of:
inserting a metallic plate member (7, 21) in a mold (11, 31) so that the plate member (7, 21) is disposed on a ridge (19) that is provided in the mold (11, 31) to define a shape of the recess (5, 23), with a top surface of the plate member (7, 21) facing the ridge (19), the plate member (7, 21) being previously deformed so as to correspond to the ridge (19); and
injecting a resin into the mold (11, 31) and positioning the plate member (7, 21) by fitting the plate member (7, 21) to a profile of the ridge (19) under an injection pressure produced as the resin is injected without holding a rear surface of the plate member (7, 21) with a part of the mold (11, 31) to achieve molding of the resin.

2. The method of producing an insert-molded product according to Claim 1, wherein the resin is injected into the mold (11, 31) so that the resin flows from a front side of the ridge (19).

3. The method of producing an insert-molded product according to Claim 1 or 2, wherein a portion of the plate member (7, 21) deformed to correspond to the ridge (19) has a lower rigidity than another portion of the plate member (7, 21).

4. The method of producing an insert-molded product according to Claim 3, wherein the portion of the plate member (7, 21) deformed to correspond to the ridge (19) is partly cut out or the portion of the plate member (7, 21) deformed to correspond to the ridge (19) is thinner than another portion of the plate member (7, 21).

5. The method of producing an insert-molded product according to any one of Claims 1 to 4, wherein end faces of the plate member (7, 21) have a specified shape for preventing detachment of the plate member (7, 21) from the insert-molded product by being buried in the insert-molded product.

6. The method of producing an insert-molded product according to Claim 5, wherein the end faces of the plate member (21) have top surface side edges chamfered into flat planes or curved planes.

7. The method of producing an insert-molded product according to Claim 5, wherein the end faces of the plate member (7, 21) are inclined to form an obtuse angle or a right angle with the top surface.

8. The method of producing an insert-molded product according to Claim 5, wherein the end faces of the plate member (21) are roughened surfaces.

9. The method of producing an insert-molded product according to any one of Claims 1 to 8, wherein the plate member (7, 21) is secured in position by a suction force applied through suction apertures (32) formed in the ridge (19).

10. An insert-molded product produced by a production method according to any one of Claims 1 to 9.

11. A mold (11, 31) for producing an insert-molded product (1) having a recess (5, 23) where a metallic surface is exposed, the mold comprising:
a ridge (19) for defining a shape of the recess (5, 23) and carrying a metallic plate member (7, 21) with its top surface facing the ridge (19) without a rear surface of the plate member (7, 21) being held; and
a gate (17) formed and disposed so as to allow a resin to flow toward the ridge (19) from a front side,
wherein molding of the resin is achieved while positioning the plate member (7, 21) by fitting the plate member (7, 21) to a profile of the ridge (19) under an injection pressure produced as the resin is injected

12. The mold according to Claim 11, further comprising:
a fixed die plate (12); a movable die plate (13) that moves to open and close with respect to the fixed die plate (12); and a slide core (14) provided between the fixed die plate (12) and the movable die plate (13),
wherein the fixed die plate (12), the movable die plate (13), and the slide core (14) form a cavity (18), the ridge (19) is formed on the slide core (14), and the gate (17) is formed in the fixed die plate (12) so as to communicate with the cavity (18).

13. The mold according to Claim 12,
wherein the ridge (19) has at least one suction aperture (32), and
wherein a suction device (33) is provided to suck air inside the cavity (18) through the suction aperture (32) to secure the plate member (7, 21) onto the ridge (19).
